(19) Europäisches Patentamt / European Patent Office / Office européen des brevets

(11) **EP 2 990 148 B1**

(12) **FASCICULE DE BREVET EUROPEEN**

| | |
|---|---|
| (45) Date de publication et mention de la délivrance du brevet:<br>**27.11.2019 Bulletin 2019/48** | (51) Int Cl.:<br>***B23D 61/02*** *(2006.01)*    ***B23D 61/04*** *(2006.01)* |

(21) Numéro de dépôt: **15166741.7**

(22) Date de dépôt: **07.05.2015**

(54) **LAME DE SCIE CIRCULAIRE**

KREISSÄGEBLATT

CIRCULAR SAW BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2014 FR 1458132**

(43) Date de publication de la demande:
**02.03.2016 Bulletin 2016/09**

(73) Titulaire: **Ledermann GmbH & Co. KG**
**72160 Horb a. N. (DE)**

(72) Inventeurs:
• **Fendeleur, Dominique**
**67460 SOUFFELWEYERSHEIM (FR)**
• **Weiss, William**
**67202 WOLFISHEIM (FR)**

(74) Mandataire: **Littolff, Denis**
**Cabinet Bleger-Rhein-Poupon**
**4A, rue de l'Industrie**
**67450 Mundolsheim (FR)**

(56) Documents cités:
| | |
|---|---|
| EP-A1- 1 700 661 | WO-A1-2008/110518 |
| AU-B2- 573 532 | DE-C- 176 804 |
| GB-A- 2 485 855 | JP-A- H0 453 622 |
| JP-A- 2013 136 138 | US-A- 4 034 638 |
| US-A- 4 114 494 | US-A- 4 135 421 |

EP 2 990 148 B1

**Description**

DOMAINE DE L'INVENTION

La présente invention se rapporte à un dispositif de sciage d'un matériau du type bois, métaux, plastique, etc. Ce dispositif de sciage comprend au moins une lame de scie circulaire. Cette lame a la particularité d'être très peu bruyante au regard des lames classiques utilisées dans les scies circulaires.

En effet, qu'il s'agisse de machine stationnaire (scie à table ou scie à onglet) ou de machine portative, une lame traditionnelle émet un bruit assourdissant à partir du moment où elle est mise en rotation, que ce soit au repos, à vide ou pendant la coupe. Ce bruit, de l'ordre de 90 à 100dB, est relativement gênant pour la personne qui travaille avec la machine, ainsi que pour les personnes se situant à proximité de la machine. Devant l'apparition de nouvelles régulations, la réduction de bruit devient une priorité pour les fabricants d'outils.

Le bruit est principalement causé par l'air circulant dans les espaces creux se situant en amont de chaque dent au niveau du pourtour denté de la lame. L'air qui s'engouffre entre les dents pendant que la lame tourne provoque un sifflement désagréable. Dans certaines conditions encore plus défavorables, le corps de la lame peut également entrer en résonance et devenir une source de bruit.

ARRIÈRE-PLAN DE L'INVENTION

Un dispositif suivant le préambule de la revendication 1 est connu du document AU573532B2.

Afin de réduire ce bruit en provenance de la lame, il est connu de réaliser des rainures dans la lame ; on parle d'ornements laser. Ces rainures sont réparties sur l'ensemble du corps de lame et sont localisées à des endroits spécifiques pour réduire localement l'amplitude des vibrations de la lame. Elles peuvent être remplies avec un matériau visco-élastique servant d'amortisseur. Leur rôle consiste à limiter la vibration lorsque la lame est en mouvement, et le bruit est par conséquent légèrement réduit.

Une autre solution, souvent combinée à la première solution, consiste à supprimer les espaces creux se situant en amont de chaque dent, afin que le pourtour de la lame soit le plus linéaire possible entre les dents. Cette solution est très efficace, et permet de réduire drastiquement le bruit, afin d'atteindre un niveau sonore inférieur à 75dB. L'inconvénient qui se pose est que les copeaux formés lors du sciage n'ont plus d'espace pour être évacués autour des dents, ce qui conduit à un risque de blocage de la machine avec un échauffement anormal, et à un détachement des dents. Pour parer à ces inconvénients, l'opérateur est obligé de réduire la vitesse d'avance de la lame afin de ne pas générer des copeaux trop volumineux. Par conséquent, certaines découpes ne peuvent plus être réalisées.

RÉSUMÉ DE L'INVENTION

L'objectif de la présente invention est de concevoir une lame de scie circulaire dont le bruit émis est minime, soit inférieur à 70dB, et qui puisse fonctionner dans une machine à plein régime, avec une évacuation optimale des copeaux. Cette lame a pour but d'améliorer le confort d'utilisation de la machine.

Le dispositif de sciage d'un matériau selon l'invention est défini par les caractéristiques de la revendication 1.

Les modes de réalisations préférés de l'invention sont définis par les caractéristiques des revendications dépendantes 2 à 7.

Alors que les dernières avancées technologiques mentionnées ci-dessus préconisaient de supprimer la découpe pour le dégagement de copeaux afin de réduire le bruit, la présente invention en prend le contrepied et impose une découpe pour le dégagement de copeaux, mais avec une caractéristique bien spécifique comparée aux lames classiques.

Jusqu'à présent, dans une lame classique, il a été considéré que la découpe doit définir un volume de dégagement de copeau qui est supérieur au volume apparent du copeau généré par une dent. Cette théorie, qui consiste à prévoir suffisamment d'espace pour le copeau, notamment lorsque ce dernier s'entortille en forme de virgule puis de tire-bouchon et devient volumineux, n'a jamais été remise en question.

L'idée principale de cette invention consiste à aller à l'encontre de ce préjugé technique, en inversant la situation. En effet, il s'avère que le copeau, au fur et à mesure de sa création, peut parfaitement être évacué par un espace inférieur à son volume apparent, sans créer de blocage dans la machine.

Le positionnement des dents sur le pourtour de la lame peut à cet égard être quelconque, c'est-à-dire obéir à une répartition uniforme ou non. Dans une hypothèse non uniforme, les dents ne sont pas placées suivant un pas angulaire. La caractéristique posée ci-dessus continue cependant à s'appliquer quelle que soit la configuration choisie, y compris dans l'hypothèse d'un pas variable : le volume de dégagement de copeaux d'au moins certaines dents est inférieur au volume apparent du copeau généré par ces dents.

De même, le pourtour du corps de lame peut présenter au moins une encoche remplaçant $k$ ($k{\geq}1$) dent(s),

chaque encoche définissant alors un volume de dégagement inférieur au volume apparent de copeaux généré par la ou les k dent(s) remplacée(s).

En pratique, le volume de dégagement de copeau est égal à la surface de dégagement de copeau délimitée par la découpe, multipliée par la largeur de coupe de la lame. La distance entre les deux extrémités de la découpe, c'est-à-dire l'ouverture de la découpe, doit être suffisante pour qu'une machine à braser puisse accéder à cette zone et venir fixer la dent sur le siège. La largeur de coupe de la lame correspond à la largeur de la dent.

Le volume apparent du copeau est égal au volume réel du copeau généré par une dent multiplié par un coefficient de foisonnement R qui dépend du matériau usiné. Concrètement, le volume apparent du copeau correspond à l'enveloppe externe du copeau entortillé, incluant par conséquent des zones creuses, tandis que le volume du copeau correspond précisément au volume de la matière composant le copeau. Le coefficient de foisonnement permet en fait de passer du volume Vs du copeau au volume apparent V du copeau, V étant égal à Vs multiplié par le coefficient de foisonnement : V = Vs x R.

Dans l'art antérieur, ce coefficient de foisonnement R a toujours été considéré comme devant être de l'ordre de 3 à 7, selon le matériau usiné. Il s'agit d'un paramètre historique, dont la pertinence n'a jamais été remise en cause dans le cas des scies circulaires. La présente invention prend le contrepied de ce préjugé technique historique, en posant qu'il est en réalité compris entre 2 et 4.

L'invention peut aussi s'appliquer dans des configurations dans lesquelles le pourtour du corps de lame comporte deux groupes de dents, les dents d'un premier groupe étant orientées en sens inverse des dents d'un second groupe. Il s'agit en fait de lames de scie qui sont capables de couper dans les deux sens.

L'un des avantages de cette invention est qu'il est à présent possible de fabriquer une lame qui soit performante quel que soit le nombre Z de dents. Jusqu'ici, la géométrie de la découpe pour le dégagement de copeau était dictée par le nombre de dents, et donc par la distance entre deux dents adjacentes. La lame selon l'invention ne tient pas compte du nombre Z de dents, car la géométrie de la découpe pour le dégagement de copeau est basée sur le volume apparent V des copeaux, prenant en compte la nouvelle estimation du coefficient de foisonnement R.

Plus précisément, dans la conception d'une lame de scie circulaire, la détermination des découpes commence comme on l'a vu par un calcul permettant d'aboutir au volume apparent V des copeaux, calcul qui nécessite les paramètres de départ objets du tableau ci-après.

| Paramètre d'entrée | Symbole | Grandeur |
|---|---|---|
| Lame : diamètre extérieur | D | mm |
| Lame : largeur de coupe | ab | mm |
| Machine : vitesse de rotation | N | Tr/min |
| Machine : vitesse d'avance | vf | m/min |
| Machine : hauteur de coupe | ae | mm |
| Machine : dépassement lame / matière | u | mm |
| Copeau : coefficient de foisonnement | R | - |

Pour obtenir les valeurs des grandeurs permettant de calculer le volume réel d'un copeau, à savoir classiquement la longueur, la largeur et l'épaisseur moyennes, des calculs préliminaires sont nécessaires, dont le calcul de la vitesse d'avance à la dent (fz), qui correspond à la distance linéaire parcourue par une dent pendant une rotation :

$$fz = \frac{vf}{Z*N}$$

Puis, le calcul de l'angle en prise ($\Phi_e$), qui correspond à l'angle formé par les dents qui sont en prise dans la matière à couper :

$$\Phi_e = \arccos\left(\frac{D-2*ae-2*u}{D}\right) - \arccos\left(\frac{D-2*u}{D}\right)$$

On peut ensuite faire le calcul de l'épaisseur moyenne du copeau (hm) formé par une dent et qui a une forme réelle de virgule :

# EP 2 990 148 B1

$$hm = \frac{fz}{\sqrt{D}} * (\sqrt{u} + \sqrt{u + ae})$$

Puis le calcul de la longueur moyenne du copeau (lb) formé par une dent et qui dépend du nombre de dents en prise :

$$lb = \frac{\pi * D * \Phi_e}{360}$$

Et enfin le calcul du volume du copeau (Vs) généré par une dent :

$$Vs = hm * lb * ab$$

Le volume apparent du copeau (V) généré par une dent est finalement, comme déjà indiqué :

$$V = Vs * R$$

A partir de là, il est possible de définir la géométrie de la découpe de dégagement de copeau, en partant de la caractéristique principale qui fonde l'invention, à savoir que le volume du dégagement de copeau ($V_{DGC}$) doit être inférieur au volume apparent du copeau (V) : $V_{DGC} \leq V$

Or, le volume du dégagement de copeau ($V_{DGC}$) est obtenu en multipliant la surface de dégagement de copeau ($S_{DGC}$) par la largeur de coupe (ab) :

$$V_{DGC} = S_{DGC} * ab$$

Il suffit par conséquent de choisir une surface de dégagement de copeau ($S_{DGC}$) qui soit inférieure au volume apparent du copeau (V) divisé par la largeur de coupe (ab) :

$$S_{DGC} \leq \frac{V}{ab}$$

Cette surface de dégagement de copeau est largement réduite par rapport à l'art antérieur. La forme de la découpe de dégagement de copeau est en pratique choisie de manière à fournir un espace suffisant devant le siège pour pouvoir aisément fixer la dent et l'affûter si besoin, tout en permettant, en utilisation, de guider les copeaux générés. Cette forme de la découpe de dégagement de copeau s'adapte donc en fonction de la taille de la dent et des angles de coupe choisis.

De façon préférentielle, la découpe est délimitée de part et d'autre par deux portions de droite d'allure parallèle et reliées entre elles par une portion arrondie et une première partie linéaire du siège, l'une des portions de droite constituant une deuxième partie linéaire du siège, les deux parties du siège étant perpendiculaires l'une à l'autre.

Selon une configuration en dehors du cadre de l'invention, le pourtour de la lame compris entre deux découpes adjacentes consiste en un secteur arrondi concentrique au cercle défini initialement par le disque du corps de lame et se rapprochant de sa périphérie. Le profil du corps de lame est dans ce cas optimisé de façon à ce que l'enlèvement de matière par rapport au disque initial soit minime. Le fait que le pourtour de la lame se rapproche du cercle parfait permet d'atténuer le bruit de manière considérable, puisqu'il n'existe quasiment plus d'espace creux où l'air peut s'engouffrer.

Cependant, dans cette configuration en dehors du cadre de l'invention, un petit espace creux a tout de même été rajouté à proximité de chaque dent. Plus précisément, un creux est pratiqué dans ledit dos arrondi de la lame en aval de chaque dent et juxtaposé au siège correspondant. Ce creux a pour fonction d'éviter toute surchauffe de la lame dans la zone de coupe, qui pourrait endommager la lame.

Selon l'invention, le pourtour de la lame compris entre deux découpes adjacentes consiste en un secteur rectiligne. Le profil du corps de lame est cependant optimisé de façon à ce que l'enlèvement de matière par rapport au disque initial soit minime. La réduction de bruit est plus faible que dans la configuration précédente mais la remise en état de l'outil est facilitée.

De façon avantageuse, dans le cadre de ce qu'il est convenu d'appeler les systèmes extensibles, afin d'augmenter la largeur de coupe, le dispositif de sciage selon l'invention peut comporter deux lames identiques positionnées côte à côte selon leur axe central de rotation, chaque lame étant dotée d'une pluralité d'encoches pratiquées chacune dans son pourtour entre deux découpes adjacentes, lesdites lames étant décalées d'un pas angulaire de manière à ce que chaque dent d'une lame se retrouve en vis-à-vis d'une encoche de l'autre lame. Cela signifie que, entre deux dents adjacentes d'une première lame, se trouvent à la fois une encoche à travers laquelle apparaît une dent de la deuxième lame, et une découpe de dégagement de copeau. Dans l'art antérieur, l'ouverture de la découpe de dégagement de copeau était si étendue que la dent de la deuxième lame y apparaissait, sans qu'il soit nécessaire de rajouter une encoche. Cependant, cette grande découpe engendrait un bruit important. Le fait de remplacer cette grande découpe par une petite découpe plus une encoche permet une réduction sonore importante lors du fonctionnement du dispositif de sciage.

Le champ d'application de la présente invention va devenir plus apparent à partir de la description détaillée ci-après. La description détaillée et les exemples qui suivent, indiquant des modes de réalisation préférés de l'invention, ne sont fournis qu'à titre d'illustration, des changements et des modifications dans le périmètre de l'invention tel que défini par les revendications pouvant devenir apparents à l'homme du métier à partir de cette description détaillée.

## BRÈVE DESCRIPTION DES FIGURES

L'invention va à présent être décrite plus en détail, en référence aux figures annexées, pour lesquelles :

- La figure 1 est une vue schématique d'une lame de scie découpant une planche de bois ;
- La figure 2 montre un copeau généré par une dent ;
- La figure 3a est une vue de face d'une dent d'un dispositif de sciage ayant une lame unique ;
- La figure 3b est une vue de face de deux dents d'un système extensible à deux lames ;
- La figure 4 est une vue agrandie d'une portion du pourtour d'une lame de scie selon l'art antérieur ;
- La figure 5 montre une portion du pourtour d'une lame de scie selon l'invention comportant un secteur périphérique linéaire entre deux découpes ;
- Les figures 6 et 7 illustrent une lame de scie selon une configuration hors du cadre de l'invention à secteurs séparant deux découpes arrondies ;
- Les figures 8 et 9 représentent une lame de scie utilisée dans un système extensible ;
- La figure 10 est une vue en perspective montrant le système extensible composé de deux lames selon les figures 8 et 9 ;
- Les figures 11 et 12 montrent une vue de face générale et agrandie du système extensible de la figure 10 ; et
- La figure 13 représente une lame de scie selon une variante de l'invention comprenant des encoches réparties de manière asymétrique sur le pourtour.

## DESCRIPTION DES FORMES DE RÉALISATION PRISES EN EXEMPLE

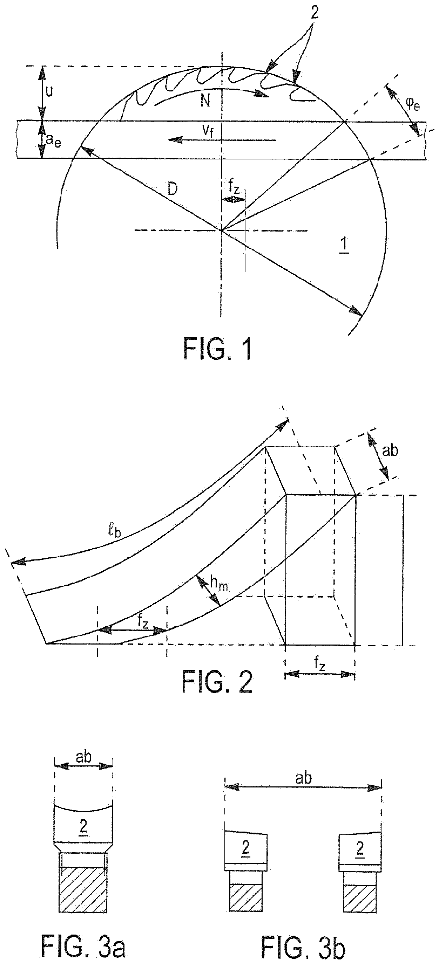

En référence à la figure 1, est représentée une lame de scie en train de découper une planche de bois. La lame comprend un corps de lame (1) et une pluralité de dents (2). Différents paramètres sont annotés sur la lame et la planche, en particulier :

- D : le diamètre de la lame
- N : la vitesse de rotation de la lame
- vf : la vitesse d'avance de la lame
- ae : la hauteur de coupe de la lame, correspondant ici à l'épaisseur de la planche
- u : le dépassement de la lame par rapport à la planche
- fz : la vitesse d'avance à la dent
- Φe : l'angle en prise

Lors de la découpe de la planche, des copeaux sont évidemment générés. Ces copeaux ont une allure de virgule dans un premier temps, comme illustré en figure 2, avant de vriller pour former un copeau hélicoïdal.

Le volume du copeau en forme de virgule correspond à sa longueur (lb) multiplié par sa largeur (ab) multiplié par son épaisseur (hm). La vitesse d'avance à la dent (fz) est également représentée afin de pouvoir s'imaginer le volume qu'aurait le copeau s'il était représenté par un parallélépipède au lieu d'une virgule.

La largeur (ab) du copeau correspond à la largeur de coupe (ab) du dispositif de sciage. Si le dispositif ne comporte qu'une seule lame, alors la largeur de coupe (ab) sera égale à la largeur de la dent (2), comme illustré en figure 3a, alors que si le dispositif comporte deux lames en parallèle, la largeur de coupe (ab) sera égale à la largeur des deux lames mesurée au niveau des dents (2) comme cela est montré en figure 3b. Ces figures présentent un exemple particulier de dents qui n'est bien entendu pas limitatif.

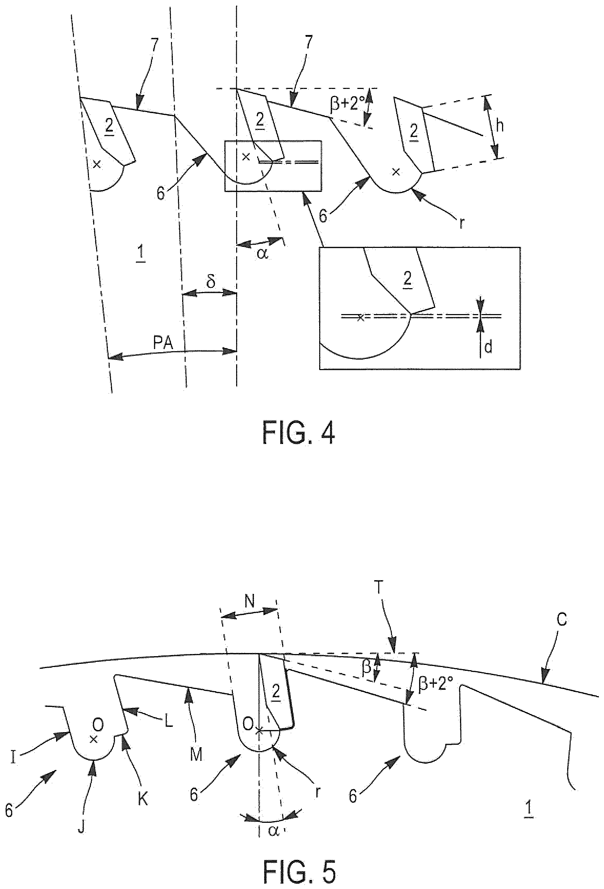

De manière générale, une lame comporte une pluralité de dents (2) insérées dans le pourtour du corps de lame (1). La figure 4 montre une vue agrandie d'un morceau de pourtour d'une lame de l'art antérieur. En amont de chaque dent (2) se trouve une découpe (6) pour le dégagement de copeau, suivi d'une rampe (7) se terminant au niveau d'une découpe (6) de dent (2) adjacente. Chaque dent (2) est fixée, généralement par brasage, dans un siège pratiqué à cet effet dans la découpe (6) pour le dégagement de copeau.

Dans l'art antérieur, comme illustré en figure 4, la géométrie de la découpe (6) pour le dégagement de copeau est dictée par le pas circonférentiel, et dépend donc du nombre de dents (2) présentes sur une lame.

Dans la suite, et pour montrer la différence d'approche technique qui résulte de l'invention, un exemple de méthode traditionnelle pour le calcul de la géométrie de la découpe (6) est donné.

Dans ce cadre, les paramètres d'entrée utilisés sont :

Z = nombre de dents sur une lame ;
D = diamètre de la lame ;
P = pas circonférentiel = $(\pi*D) / Z$ ;
PA = pas angulaire = $360° / Z$ ;
h = hauteur de la dent (2) ;
$\alpha$ = angle d'attaque de la dent (2).

Les paramètres suivants sont ensuite à définir pour obtenir la géométrie de la découpe (6) :

r = rayon de dégagement ;
d = distance entre le point bas du siège et le centre du rayon r de dégagement ;
$\delta$ = angle entre la pointe de la dent (2) et le départ de la découpe (6).

Par expérience, et selon différentes hypothèses de configurations correspondant à des intervalles prédéterminés appliqués à des paramètres d'entrée sélectionnés :

Si P≥16 et $\alpha$>0 alors :

$$r = P / 6$$

$$d = r * 0,08$$

$$\delta = PA * 0,4$$

Si P≥16 et $\alpha$≤0 alors :

$$r = P / 6$$

d = 0
$\delta$ = PA * 0,4
Si P<16 et h<10,5 alors :

$$r = P / 6,5$$

d = 0

$$\delta = PA * 0.40$$

Si P<16 et h$\geq$10,5 alors :

$$r = P / 6,5$$

d = 0

$$\delta = PA * 0{,}45$$

De ces géométries, il résulte dans tous les cas une surface de dégagement de copeau relativement grande et ouverte, et donc source de bruit à la fois quand la lame tourne à vide et quand la lame coupe.

La lame représentée sur les figures 5 à 7, possède, au niveau de chaque dent (2), une découpe (6) de dégagement de copeau dont la géométrie ne dépend pas du nombre de dents (2) fixées sur le pourtour de la lame. La conception de la découpe (6) s'effectue autour de la dent (2) en elle-même, puis le contour extérieur restant entre deux dents (2) adjacentes se fait par remplissage afin de s'approcher du profil initial du disque qui compose le corps de lame (1).

Comme cela a été décrit précédemment, la surface de la découpe $S_{DGC}$ ne doit pas dépasser un seuil qui dépend uniquement du diamètre et de la largeur de coupe de la lame, de paramètres machine, et du coefficient de foisonnement, comme cela résulte des calculs effectués ci-dessus. La surface de la découpe $S_{DGC}$ obtenue *in fine* est nettement plus petite que dans l'art antérieur, mais permet tout de même le passage des copeaux et un bon fonctionnement de la lame.

La découpe (6) comporte, comme illustré en figure 5 :

- une première partie I correspondant à une droite ;
- une seconde partie J arrondie correspondant à une portion d'un cercle de rayon r et de centre O ;
- une troisième partie K linéaire correspondant à la profondeur du siège sur lequel repose la dent (2) ;
- une quatrième partie L linéaire correspondant à la hauteur du siège, et à une droite parallèle à la partie I.

Deux découpes (6) adjacentes sont reliées entre elles par une partie M correspondant à une rampe de dépouille. Cette rampe M définit un angle de dépouille $\beta$ formé entre cette rampe M et le cercle C décrit par les dents de la lame. En prenant la tangente T à ce cercle C au niveau de l'arête tranchante de la dent (2), selon l'invention, l'angle formé avec la rampe M correspond à l'angle de dépouille $\beta$ à $\beta$ + 2°.

L'ouverture N de la découpe (6) correspond à la distance entre les parties I et L.

Cette ouverture N varie en fonction de l'épaisseur de la dent (2). Il faut qu'il y ait toujours un espace suffisant entre la partie I et la dent (2) pour permettre le brasage de la dent (2) sur son siège, ainsi que, optionnellement, le passage de la meule d'affûtage de l'angle d'attaque. Cet espace ne peut être inférieur à 2.0 mm, à l'aune des moyens techniques de fixation actuels. Il est possible que cet espace soit encore réduit dans les années à venir avec l'émergence de nouvelles technologies.

Par exemple, pour une dent (2) épaisse en carbure de tungstène, l'ouverture N peut varier entre 4,5 mm et 8 mm.

Pour une dent (2) en diamant, moins épaisse qu'une dent (2) en carbure, l'ouverture N peut descendre à 3,5 mm.

Une fois l'ouverture N et la profondeur de siège K définies, la partie arrondie J peut être dessinée. Elle relie simplement la partie I à la partie K. Le centre O du cercle de cette partie arrondie J se trouve sur le rayon du disque de la lame passant par l'arrête tranchante de la dent (2).

Les dents (2) peuvent avoir plusieurs longueurs, généralement comprises entre 2,5mm et 15mm.

L'angle d'attaque $\alpha$ de la dent (2) peut varier de -10° à +30°.

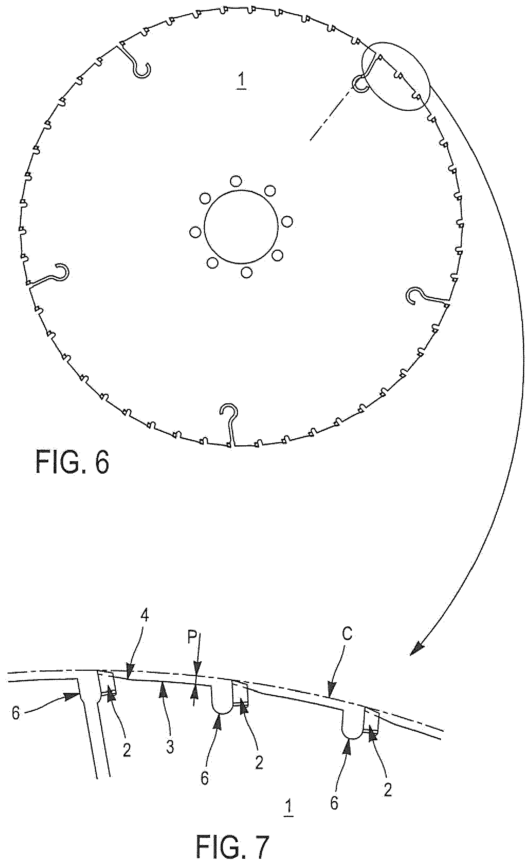

La figure 6 présente une lame complète. La figure 7 montre plus précisément les détails techniques qui varient par rapport au cas présenté en figure 5.

La géométrie de la découpe pour le dégagement de copeau est identique à celle de la figure 5. Seule la partie M est différente, en ce que la rampe de dépouille est remplacée par un dos arrondi (3) concentrique au cercle C défini initialement par le disque du corps de lame (1). Un creux (4) est pratiqué dans ce dos (3), immédiatement en aval de la dent (2). La distance P entre le dos arrondi (3) et le cercle C est d'environ 0,8mm.

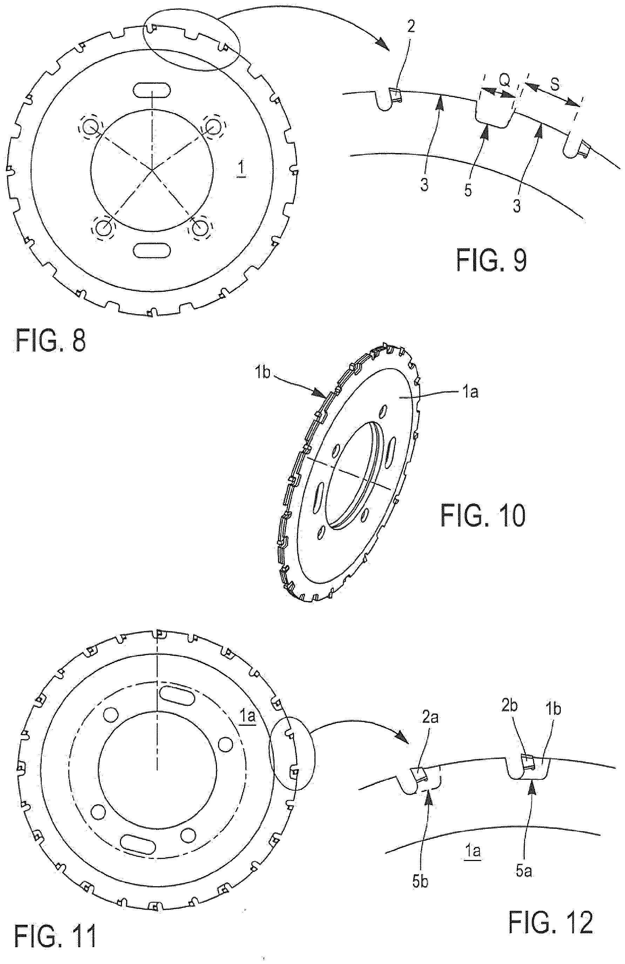

Les figures 8 à 12 montrent ce qu'on appelle un système extensible, c'est-à-dire un assemblage de deux lames de scie aptes à être montées dans un dispositif de sciage, afin d'augmenter la largeur de coupe.

Une telle lame de scie est représentée individuellement en figure 8. En plus de toutes les caractéristiques présentées précédemment, cette lame comprend une pluralité d'encoches (5) pratiquées dans son pourtour de manière à ce qu'il y ait une encoche (5) entre deux dents (2) adjacentes. Cette encoche (5) est dimensionnée de manière à offrir une ouverture Q qui soit au moins égale à l'ouverture N de la découpe pour le dégagement de copeau. En effet, l'objectif est d'assembler deux lames identiques, en les décalant d'un pas angulaire, de manière à ce que chaque dent (2) d'une lame se retrouve en vis-à-vis d'une encoche (5) de l'autre lame, comme illustré aux figures 10 à 12. L'ouverture Q de l'encoche (5) doit donc être suffisamment large pour faire apparaître une dent (2) avec sa découpe correspondante mais pas trop importante pour ne pas générer du bruit.

Dans l'exemple présenté aux figures 8 et 9, l'ouverture de l'encoche est de 5,4mm, et elle se situe à une distance S de 9,49mm de la partie I de la découpe adjacente en aval.

En figures 10 et 11, les deux lames sont assemblées, et les corps de lame (1a, 1b) sont décalés d'un pas angulaire. Ainsi, sur la figure 12, on peut voir que la dent (2b) et un petit morceau d'un premier corps de lame (1b) apparaissent à travers l'encoche (5a) pratiquée sur le pourtour du second corps de lame (1a), l'encoche (5b) pratiquée sur le pourtour du premier corps de lame (1b) étant située dans l'arrière-plan de la dent (2a) fixée au second corps de lame (1a).

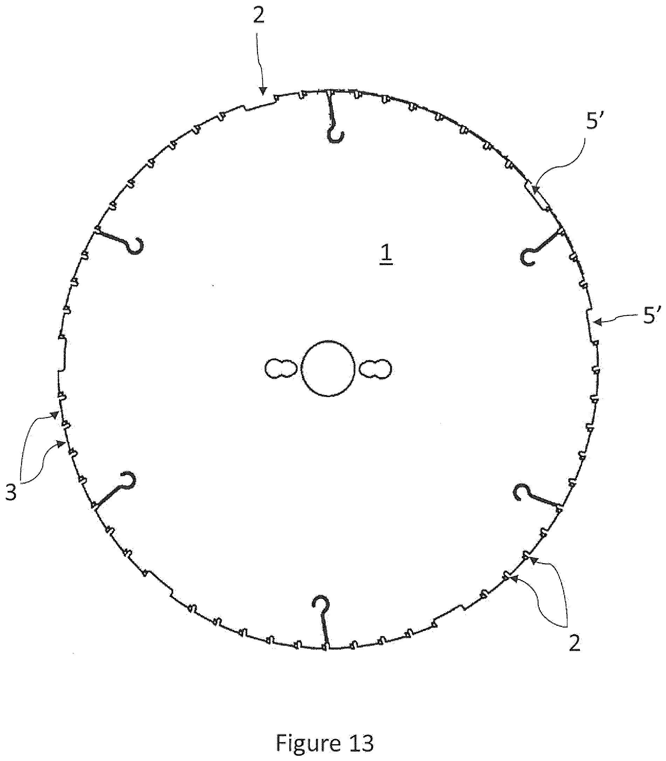

En référence à la figure 13, la variante représentée montre une lame de scie (1) qui comporte des encoches (5') réparties de manière irrégulière sur le pourtour, conduisant à une absence de dents à certains endroits.

Les configurations montrées aux figures citées ne sont que des exemples possibles, nullement limitatifs. L'invention englobe aussi les variantes de formes et de conceptions à la portée de l'homme de l'art limitées par le cadre de l'invention définie par les revendications.

## Revendications

**1.** Dispositif de sciage d'un matériau, comprenant au moins une lame de scie circulaire consistant en :

- un corps de lame (1) ayant la forme d'un disque ;
- une pluralité n (n>1) de dents (2) insérées dans le pourtour du corps de lame (1) de manière à être distribuées sur la circonférence du disque, chaque dent (2) générant un copeau provenant du matériau usiné ;

une découpe (6) pour le dégagement de copeau étant prévue dans le pourtour du corps de lame (1) au niveau de chaque dent (2) et intégrant un siège auquel la dent (2) est soudée, pour au moins une dent, ladite découpe (6) définissant un volume de dégagement de copeau ($V_{DGC}$) qui est inférieur au volume apparent du copeau (V) généré par une dent (2), **caractérisé en ce que** le pourtour de la lame compris entre deux découpes (6) adjacentes consiste en un secteur rectiligne sous forme d'une rampe M définissant un angle formé entre cette rampe M et un cercle C décrit par les dents (2) de la lame, l'angle formé par la tangente T à ce cercle C au niveau de l'arête tranchante de la dent (2) avec la rampe M correspondant à l'angle de dépouille β à β + 2°.

**2.** Dispositif de sciage d'un matériau selon la revendication précédente, **caractérisé en ce que** le pourtour du corps de lame (1) comporte deux groupes de dents (2), les dents (2) d'un premier groupe étant orientées en sens inverse des dents (2) d'un second groupe.

**3.** Dispositif de sciage d'un matériau selon l'une des revendications précédentes, **caractérisé en ce que** la découpe (6) est délimitée de part et d'autre par deux portions de droite (I, L) d'allure parallèle et reliées entre elles par une portion arrondie (J) et une première partie linéaire (K) du siège, l'une des portions de droite (L) constituant une deuxième partie linéaire du siège, les deux parties (K, L) du siège étant perpendiculaires l'une à l'autre.

**4.** Dispositif de sciage d'un matériau selon l'une des revendications précédentes, **caractérisé en ce que** la lame (1) présente une pluralité d'encoches (5) sur son pourtour, lesdites encoches (5) présentant une ouverture Q au moins égale à une ouverture N de la découpe (6).

**5.** Dispositif de sciage d'un matériau selon la revendication précédente, **caractérisé en ce qu'**il y a une encoche (5) entre deux dents (2) adjacentes.

**6.** Dispositif de sciage d'un matériau selon l'une des revendications 4 et 5, **caractérisé en ce que** la lame (1) comporte des encoches (5) réparties de manière irrégulière sur le pourtour.

**7.** Dispositif de sciage d'un matériau selon l'une des revendications précédentes, **caractérisé en ce qu'**il comporte deux lames identiques positionnées côte à côte selon leur axe central de rotation, chaque lame étant dotée d'une pluralité d'encoches (5) pratiquées chacune dans son pourtour entre deux découpes (6) adjacentes, lesdites lames étant décalées d'un pas angulaire de manière à ce que chaque dent (2) d'une lame se retrouve en vis-à-vis d'une encoche (5) de l'autre lame.

**Patentansprüche**

1. Materialsägevorrichtung, umfassend mindestens ein Kreissägeblatt bestehend aus:

    - einem scheibenförmigen Blattkörper (1);
    - einer Vielzahl n (n > 1) von Zähnen (2), die in den Außenrand des Blattkörpers (1) eingefügt sind, um auf dem Umfang der Scheibe verteilt zu sein, wobei jeder Zahn (2) einen Span erzeugt, der von dem bearbeiteten Material stammt;

    wobei ein Ausschnitt (6) zur Spanabscheidung im Außenrand des Blattkörpers (1) an jedem Zahn (2) vorgesehen ist und eine Auflage, an welcher der Zahn (2) angeschweißt ist, für mindestens einen Zahn umfasst, wobei der Ausschnitt (6) ein Spanabscheidungsvolumen ($V_{DGC}$) definiert, das kleiner als ein Schüttvolumen des Spans (V) ist, das durch einen Zahn erzeugt wird, **dadurch gekennzeichnet, dass** der Außenrand des Blatts, der zwischen zwei angrenzenden Ausschnitten (6) liegt, aus einem geradlinigen Sektor in Form einer Rampe M besteht, der einen Winkel definiert, der zwischen dieser Rampe M und einem Kreis C, der durch die Zähne (2) des Blatts beschrieben wird, gebildet wird, wobei der Winkel, der durch die Tangente T zu diesem Kreis C an der Schneidkante des Zahns (2) mit der Rampe M gebildet wird, dem Fasenfreiwinkel $\beta$ bis $\beta + 2°$ entspricht.

2. Materialsägevorrichtung gemäß dem vorhergehenden Anspruch, **dadurch gekennzeichnet, dass** der Außenrand des Blattkörpers (1) zwei Zahngruppen (2) umfasst, wobei die Zähne (2) einer ersten Gruppe in umgekehrter Richtung der Zähne (2) einer zweiten Gruppe orientiert sind.

3. Materialsägevorrichtung nach einem der vorhergehenden Ansprüche, **dadurch gekennzeichnet, dass** der Ausschnitt (6) auf beiden Seiten durch zwei Geradenabschnitte (I, L) begrenzt ist, die parallel verlaufen und durch einen abgerundeten Abschnitt (J) und einen ersten linearen Teil (K) der Auflage miteinander verbunden sind, wobei einer der Geradenabschnitte (L) einen zweiten linearen Teil der Auflage bildet, wobei die beiden Teile (K, L) der Auflage zueinander rechtwinklig sind.

4. Materialsägevorrichtung nach einem der vorhergehenden Ansprüche, **dadurch gekennzeichnet, dass** das Blatt (1) eine Vielzahl von Einschnitten (5) auf seinem Außenrand aufweist, wobei die Einschnitte (5) eine Öffnung Q aufweisen, die mindestens gleich einer Öffnung N des Ausschnitts (6) ist.

5. Materialsägevorrichtung nach dem vorhergehenden Anspruch, **dadurch gekennzeichnet, dass** es zwischen zwei angrenzenden Zähnen (2) einen Einschnitt (5) gibt.

6. Materialsägevorrichtung nach einem der Ansprüche 4 und 5, **dadurch gekennzeichnet, dass** das Blatt (1) Einschnitte (5) umfasst, die unregelmäßig auf dem Außenrand verteilt sind.

7. Materialsägevorrichtung nach einem der vorhergehenden Ansprüche, **dadurch gekennzeichnet, dass** sie zwei identische Blätter umfasst, die entlang ihrer Drehmittelachse nebeneinander positioniert sind, wobei jedes Blatt mit einer Vielzahl von Einschnitten (5) versehen ist, die jeweils in seinem Außenrand zwischen zwei angrenzenden Ausschnitten (6) angebracht sind, wobei die Blätter um einen Teilungswinkel derart versetzt sind, dass jeder Zahn (2) eines Blatts einem Einschnitt (5) des anderen Blatts gegenübersteht.

**Claims**

1. A device for sawing a material, comprising at least one circular saw blade consisting of:

    - a blade body (1) in the form of a disc;
    - a plurality n (n>1) of teeth (2) inserted into the perimeter of the blade body (1) so as to be distributed on the circumference of the disc, each tooth (2) generating a chip coming from the machined material;

a chip clearance cutout (6) being provided in the perimeter of the blade body (1) at each tooth (2) and incorporating a seat to which the tooth (2) is welded, for at least one tooth, said cutout (6) defining a chip clearance volume ($V_{DGC}$) that is smaller than the visible volume of the chip (V) generated by a tooth (2), **characterized in that** the perimeter of the blade comprised between two adjacent cutouts (6) consists of a rectilinear sector in the form of a ramp M defining an angle formed between this ramp M and a circle described by the teeth (2) of the blade, the angle formed by the tangent T to this circle C at the sharp edge of the tooth (2) with the ramp M corresponding to the draft angle $\beta$ to $\beta + 2°$.

2. The device for sawing a material according to the preceding claim, **characterized in that** the perimeter of the blade body (1) includes two groups of teeth (2), the teeth (2) of a first group being oriented in the direction opposite the teeth (2) of a second group.

3. The device for sawing a material according to one of the preceding claims, **characterized in that** the cutout (6) is delimited on either side by two parallel straight portions (I, L) and connected to one another by a rounded portion (J) and a first linear part (K) of the seat, one of the straight portions (L) making up a second linear part of the seat, the two parts (K, L) of the seat being perpendicular to one another.

4. The device for sawing a material according to one of the preceding claims, **characterized in that** the blade (1) has a plurality of notches (5) on its perimeter, said notches (5) having an opening Q at least equal to an opening N of the cutout (6).

5. The device for sawing a material according to the preceding claim, **characterized in that** there is a notch (5) between two adjacent teeth (2).

6. The device for sawing a material according to one of claims 4 and 5, **characterized in that** the blade (1) includes notches (5) distributed irregularly on the perimeter.

7. The device for sawing a material according to one of the preceding claims, **characterized in that** it includes two identical blades positioned side by side along their central axis of rotation, each blade being provided with a plurality of notches (5) each formed in its perimeter between two adjacent cutouts (6), said blades being offset by an angular pitch such that each tooth (2) of a blade is located across from a notch (5) of the other blade.

FIG. 1

FIG. 2

FIG. 3a        FIG. 3b

FIG. 4

FIG. 5

FIG. 6

FIG. 7

FIG. 8

FIG. 9

FIG. 10

FIG. 11

FIG. 12

Figure 13

EP 2 990 148 B1

## RÉFÉRENCES CITÉES DANS LA DESCRIPTION

**Documents brevets cités dans la description**

- AU 573532 B2